# EUROPÄISCHE PATENTSCHRIFT

(11) **EP 2 043 888 B1**
(45) Veröffentlichungstag und Bekanntmachung des Hinweises auf die Patenterteilung: **15.09.2010**
(21) Anmeldenummer: 07725204.7
(22) Anmeldetag: 14.05.2007
(51) Int. Cl.: B60N 2/28, B60N 2/48, B60R 11/00

(54) **ÜBERWACHUNGS-/UNTERHALTUNGSSYSTEM FÜR EINEN KINDERSITZ**
MONITORING/ENTERTAINMENT SYSTEM FOR A CHILD'S SEAT
SYSTÈME DE SURVEILLANCE ET DE DIVERTISSEMENT POUR SIÈGE ENFANT

(30) Priorität: 26.07.2006 DE 102006034556
(43) Veröffentlichungstag der Anmeldung: 08.04.2009
(73) Patentinhaber: CYBEX Industrial Ltd., Causeway Bay Hong Kong (CN)
(72) Erfinder: POS, Martin, 95445 Bayreuth (DE)
(74) Vertreter: Popp, Eugen
(86) Internationale Anmeldenummer: PCT/EP2007/004285
(87) Internationale Veröffentlichungsnummer: WO 2008/011931

(56) Entgegenhaltungen:
- EP-A1- 1 400 417
- DE-A1-102005 058 113
- DE-U1- 20 119 410
- US-A- 5 147 109

## Beschreibung

Die vorliegende Erfindung betrifft ein Überwachungs- und/oder Unterhaltungssystem, insbesondere für einen Kindersitz, zum Überwachen und/oder Unterhalten eines in einem Kindersitz sitzenden Kindes.

Aus dem Stand der Technik sind Fahrzeugsitze mit integriertem Bildschirmgerät bekannt. Beispielsweise ist in der Druckschrift DE 201 19 410 U1 ein Fahrzeugsitz mit einer an einer Rückenlehne lösbar befestigbaren Kopfstütze offenbart, wobei in der Kopfstütze ein Bildschirmgerät integriert ist. Dabei ist vorgesehen, dass die Kopfstütze einen Aufnahmeraum aufweist, in welchem das Bildschirmgerät im Montagezustand form- und kraftschlüssig zwischen der Kopfstütze und der Rückenlehne befestigt ist. Diese aus dem Stand der Technik bekannte Lösung ist geeignet, um Insassen eines Kraftfahrzeuges die Möglichkeit zu bieten, sich während beispielsweise längerer Fahrten abzulenken bzw. sich zu beschäftigen oder zu informieren.

Allerdings erfordert die bekannte Lösung, daß zunächst eine am Fahrzeugsitz standardmäßig vorgesehene Kopfstütze von dem Fahrzeugsitz entfernt wird, damit anstelle dieser die Kopfstütze mit dem integrierten Bildschirmgerät eingesetzt werden kann. Für Fahrzeugsitze, bei denen die Kopfstütze nicht lösbar befestigt ist, kann eine derartige Umrüstung auf eine Kopfstütze mit einem integrierten Bildschirmgerät wenn überhaupt nur mit großem Aufwand durchgeführt werden. Des weiteren ist das bekannte Unterhaltungssystem lediglich dahingehend ausgelegt, Fahrzeuginsassen zu unterhalten, die auf dem Rücksitz des Fahrzeuges sitzen.

Die Verwendung des bekannten Unterhaltungssystems zur Unterhaltung eines in einem Kindersitz sitzenden Kindes ist, wenn überhaupt, nur mit Einschränkungen möglich. Dies gilt insbesondere dann, wenn die Sitzschale des Kindersitzes entgegen der Fahrtrichtung des Fahrzeuges ausgerichtet ist. Dann nämlich ist das in dem Kindersitz sitzende Kind mit seinem Rücken zu dem in der Kopfstütze integrierten Bildschirmgerät ausgerichtet.

Aus der Druckschrift DE 295 18 369 U1 ist eine ähnliche Lösung bekannt. Das in diesem Stand der Technik offenbarte Unterhaltungssystem allerdings ist in einem Formkörper integriert, der derart ausgebildet ist, daß er über die standardmäßig vorgesehene Kopfstütze eines Fahrzeugsitzes gestülpt werden kann. Mit dieser bekannten Lösung können zwar unterschiedliche Typen von Standard-Kopfstützen nachträglich umgerüstet werden, auch wenn diese Kopfstützen nicht von dem Fahrzeugsitz entfernbar sind, die Verwendung des bekannten Unterhaltungssystems in einem Kindersitz zum Unterhalten eines in dem Kindersitz sitzenden Kindes ist aber ebenfalls nicht möglich.

Ein gattungsmäßes Unterhaltungssystem ist aus der US-B-5147109 bekannt.

Demnach liegt der vorliegenden Erfindung die Problemstellung zugrunde, ein Überwachungs- und/oder Unterhaltungssystem (nachfolgend Überwachungs-/Unterhaltungssystem genannt) anzugeben, welches für ein in einem Kindersitz sitzendes Kind geeignet ist, wenn die Sitzschale des Kindersitzes entgegen der Fahrtrichtung ausgerichtet ist.

Hiervon ausgehend liegt der vorliegenden Erfindung die Aufgabe zugrunde, ein derartiges Überwachungs- und Unterhaltungssystem anzugeben, wobei ferner auf einfache Weise eine Nachrüstung von Überwachungs- und Unterhaltungssystemen in Kindersitzen ermöglicht ist.

Diese Aufgabe wird durch die Merkmale des Anspruches 1 gelöst. Im einzelnen ist vorgesehen, daß das erfindungsgemäße Überwachungs-/Unterhaltungssystem zumindest eine elektronische Baugruppe zum Darstellen und/oder Aufnehmen von Bildern, Filmen oder Filmsequenzen aufweist, wobei diese elektronische Baugruppe das Herzstück des Überwachungs-/Unterhaltungssystems bildet. Des weiteren ist ein Formkörper vorgesehen, in welchem die zumindest eine elektronische Baugruppe aufgenommen und gehalten ist. Der Formkörper weist zumindest ein vorzugsweise integral mit dem Formkörper ausgebildetes Befestigungselement auf, welches ausgelegt ist, eine kraftschlüssige Verbindung mit einem Grundrahmen des Kindersitzes zu bilden, um derart das Überwachungs-/Unterhaltungssystem am Grundrahmen des Kindersitzes zu befestigen. Um zu erreichen, daß eine Überwachung bzw. Unterhaltung eines in dem Kindersitz sitzenden Kindes ermöglicht wird, wenn die Sitzschale des Kindersitzes entgegen der Fahrtrichtung ausgerichtet ist, ist vorgesehen, daß in dem am Grundrahmen des Kindersitzes befestigten Zustand des Formkörpers die Vorderseite des Formkörpers und die in dem Formkörper aufgenommene zumindest eine elektronische Baugruppe zu der Sitzschale des Kindersitzes zeigen.

Die Vorteile der erfindungsgemäßen Lösung liegen auf der Hand: Zum einen ist die elektronische Baugruppe, welche beispielsweise einen Flachbildschirm oder dergleichen aufweisen kann, nunmehr in einem Formkörper integriert, der lediglich an dem Grundrahmen des Kindersitzes befestigt werden muß. Insofern ist nahezu bei beliebigen Kindersitzen, die einen geeigneten Grundrahmen aufweisen, jederzeit eine Nachrüstung möglich, um den Kindersitz mit den Funktionen des Überwachens bzw. Unterhaltens auszurüsten.

Das Überwachungs-/Unterhaltungssystem, wie es im Anspruch 1 definiert wird, zeichnet sich ferner dadurch aus, daß zur Unterhaltung des in dem Kindersitz sitzenden Kindes der Formkörper derart am Kindersitz befestigt werden kann, daß die Vorderseite des Formkörpers und beispielsweise der in dem Formkörper aufgenommene Flachbildschirm so an dem Grundrahmen des Kindersitzes angebracht werden können, daß auch eine Unterhaltung des Kindes möglich ist, wenn die Sitzschale des Kindersitzes entgegen der Fahrtrichtung ausgerichtet ist.

Bevorzugte Weiterentwicklungen der erfindungsgemäßen Lösung sind in den Unteransprüchen angegeben.

So ist in einer besonders bevorzugten Realisierung der elektronischen Baugruppe vorgesehen, daß diese zumindest ein Kamerasystem, ein DVD-Abspielgerät, ein Video-Abspielsystem, einen MP4-Player, einen direkten Internetzugang oder ein anderes derartiges Medien-Abspiel- bzw. Medien-Aufzeichnungssystem aufweist. Denkbar hierbei wäre es, daß die elektronische Baugruppe eine einzelne oder eine Kombination der vorstehend genannten Komponenten aufweist. Durch das Vorsehen eines Kamerasystems, welches in dem Formkörper des Überwachungs-/Unterhaltungssystems integriert ist, ist eine Überwachung von beispielsweise einem in dem Kindersitz schlafenden Kleinkind möglich. Dies ist insbesondere dann von Vorteil, wenn der Kindersitz beispielsweise in dem Fahrzeug derart angeordnet ist, daß in den Kindersitz nicht eingesehen werden kann, wie es beispielsweise dann der Fall ist, wenn sich der Kindersitz auf dem Rücksitz des Fahrzeuges befindet und die Sitzschale des Kindersitzes entgegen der Fahrtrichtung ausgerichtet ist.

Andererseits ist es zusätzlich oder alternativ zu dem Kamerasystem denkbar, als elektronische Baugruppe ein Medien-Abspielsystem vorzusehen, um dem in dem Kindersitz sitzenden Kleinkind die Möglichkeit zu bieten, sich während der Fahrt zu unterhalten und abzulenken. Insbesondere eignet sich hierfür ein Bildschirmgerät, bei welchem es sich beispielsweise um einen TV-Empfänger, ein Video- bzw. DVD-Abspielgerät oder einen Computer handelt.

In vorteilhafter Weise ist die elektronische Baugruppe mit der fahrzeuginternen Spannungsversorgung elektrisch versorgt. Die hierzu erforderliche Versorgungsleitung kann beispielsweise mit einem Adapterstecker ausgerüstet sein, der zum Anschluß an den standardmäßig vorgesehenen Zigarettenanzünder geeignet ist.

Im Hinblick auf das Kamerasystem sei angemerkt, daß dieses, beispielsweise drahtgebunden oder auch kabellos, mit einem Monitor kommuniziert, der für den Fahrer bzw. Beifahrer des Fahrzeuges gut einsehbar angeordnet ist. Als möglicher Überwachungsmonitor kann beispielsweise das Display eines Navigationssystems oder der Rückspiegel des Fahrzeuges verwendet werden.

Besonders bevorzugt ist bei der erfindungsgemäßen Lösung der Formkörper derart ausgebildet, daß dieser insbesondere formschlüssig in bzw. an dem Grundrahmen des Kindersitzes aufnehmbar ist. Dies ist einerseits aus ästhetischen Gründen erstrebenswert, andererseits liefert aber auch eine formschlüssige Aufnahme des Überwachungs-/Unterhaltungssystems im Kindersitz-Grundträger eine erhöhte Sicherheit, da keine Kanten oder ähnliche Vorsprünge in den Fahrgastraum einragen, an denen sich das Kind oder die Fahrzeuginsassen verletzen können. Dadurch ist ein ausreichender Schutz der Passagiere gewährleistet. Insofern ist auch ein umfassender Aufprallschutz insbesondere für das vor dem Überwachungs-/Unterhaltungssystem sitzende Kleinkind gegeben.

In vorteilhafter Weise ist das zumindest eine am Formkörper ausgebildete Befestigungselement zur kraftschlüssigen Fixierung des Überwachungs-/Unterhaltungssystems am Grundrahmen des Kindersitzes so ausgebildet, daß auch eine Höhenanpassung der Anordnung des Formkörpers am Grundrahmen des Kindersitzes ermöglicht wird. Insbesondere sollte das zumindest eine Befestigungselement derart ausgebildet sein, daß einerseits eine kraftschlüssige und andererseits auch eine formschlüssige Verbindung mit dem Grundrahmen des Kindersitzes gebildet wird, und zwar selbst dann noch, wenn das Überwachungs-/Unterhaltungssystem zur Anpassung in seiner Höhe verstellt werden muß. Dadurch kann einerseits grundsätzlich ein ausreichender Schutz insbesondere des in dem Kindersitz sitzenden Kindes gewährleistet werden, andererseits ist aber auch eine für das in der Sitzschale des Kindersitzes sitzende Kleinkind optimale Ausrichtung der in dem Formkörper an der Vorderseite des Formkörpers aufgenommenen elektronischen Baugruppe gewährleistet. Dies ist insbesondere dann notwendig, wenn die elektronische Baugruppe ein Kamerasystem zur Überwachung des in dem Kindersitz sitzenden Kindes aufweist.

Um zu erreichen, daß die Bedienbarkeit, aber auch die Sicherheit des Kindersitzes mit dem aufgesteckten Überwachungs-/Unterhaltungssystem nicht beeinflußt wird, ist bei einer bevorzugten Weiterentwicklung vorgesehen, daß der Formkörper derart ausgebildet ist, daß in seinem am Grundrahmen des Kindersitzes befestigten Zustand zwischen der Rückseite des Formkörpers und dem Grundrahmen des Kindersitzes ein Gurtführungsbereich gebildet wird, in welchem ein Befestigungsgurt des Kindersitzes geführt wird. Dadurch kann grundsätzlich eine ungehinderte Führung des Befestigungsgurtes erreicht werden, so daß der Kindersitz bzw. der Grundrahmen des Kindersitzes in seiner üblichen Art und Weise am Fahrzeugsitz gesichert werden kann.

Hinsichtlich des zumindest einen am Formkörper ausgebildeten Befestigungselements ist vorzugsweise vorgesehen, daß dieses zumindest ein an der Oberseite des Formkörpers ausgebildetes Befestigungselement für einen Eingriff mit einer sich im wesentlichen horizontal erstreckenden Kante des Grundrahmens des Kindersitzes und/oder zumindest ein an einer der Seiten des Formkörpers ausgebildetes Befestigungselement für einen Eingriff mit einer sich im wesentlichen vertikal erstreckenden Kante des Grundrahmens des Kindersitzes aufweist. Durch das Vorsehen einer Vielzahl von derartigen Befestigungselementen, die vorzugsweise an der Peripherie des Formkörpers ausgebildet sind, wird erreicht, daß das Überwachungs-/Unterhaltungssystem über mehrere Punkte mit dem Grundrahmen des Kindersitzes kraftschlüssig verbindbar ist. Dies garantiert insbesondere eine sichere Fixierung des Systems am Kindersitz.

Unter dem hierin verwendeten Begriff "Kante des Grundrahmens" ist jedwede Komponente zu verstehen, die beispielsweise standardmäßig am Grundrahmen des Kindersitzes ausgebildet ist und die einen Eingriff mit einem am Formkörper angeordneten Befestigungselement ermöglicht. Beispielsweise kommt als Kante des Grundrahmens ein Versteifungselement in Frage, welches am Grundrahmen vorgesehen ist. Andererseits kann die Kante des Grundrahmens auch ein Wulstvorsprung sein, der am Peripheriebereich des Grundrahmens ausgebildet ist. Derartige Wulstvorsprünge sind insbesondere dann in der Regel gegeben, wenn es sich bei dem Grundrahmen des Kindersitzes um ein schalenförmiges Formteil handelt. Um einen Eingriff der am Formkörper des Überwachungs-/Unterhaltungssystems ausgebildeten Befestigungselements zu ermöglichen, weist dieses eine geeignete Profilierung auf, um in ein entsprechendes am Grundrahmen des Kindersitzes komplementär hierzu ausgebildetes Verankerungselement eingreifen zu können. Als mögliche Profilierung kommen verschiedene Lösungen in Frage. Beispielsweise wäre es denkbar, einen Krampenbereich, also ein entsprechend gewinkeltes Verbindungselement hierfür vorzusehen.

Andererseits bietet sich auch eine Schnappverbindung an, bei welcher die Elastizität des Werkstoffes des am Formkörper ausgebildeten Befestigungselements für die Verbindung mit einem am Grundrahmen des Kindersitzes komplementär hierzu ausgebildeten Verankerungselement ausgenutzt wird. Bei einer derartigen Schnappverbindung kann das Befestigungselement als Flügelteil elastisch ausgebildet sein. Selbstverständlich wäre es aber auch denkbar, das am Grundrahmen des Kindersitzes ausgebildete Verankerungselement als elastisches Flügelteil einzusetzen.

Darüber hinaus kann selbstverständlich die Befestigungselement-Verankerungselement-Anordnung als Zinken-Zapfen-Anordnung ausgebildet sein, wie beispielsweise in Gestalt einer Schwalbenschwanzverbindung oder dergleichen.

Grundsätzlich allerdings sollte das zumindest eine Befestigungselement des Formkörpers derart ausgebildet sein, um eine kraftschlüssige Verbindung mit dem Grundrahmen des Kindersitzes zu ermöglichen. Eine derartige kraftschlüssige Verbindung entsteht durch die Anwendung von Kraft, welche durch eine geeignete Vorspannung erzeugt wird. Der Zusammenhalt der kraftschlüssigen Verbindung wird rein durch die Haftreibung gewährleistet. Andererseits sollte das Befestigungselement ausgelegt sein, auch eine formschlüssige Verbindung mit dem Grundrahmen des Kindersitzes auszubilden. Eine formschlüssige Verbindung entsteht durch das Ineinandergreifen von mindestens zwei Verbindungspartnern, wie beispielsweise einem am Formkörper ausgebildeten Befestigungselement und einem am Grundrahmen des Kindersitzes ausgebildeten Verankerungselement. Beim Formschluß werden die Kräfte, welche durch die Betriebsbelastung verursacht werden, normal, d.h. rechtwinklig zu den Flächen der beiden Verbindungspartner übertragen. Durch die mechanische Verbindung können sich die Verbindungspartner auch ohne oder bei unterbrochener Kraftübertragung nicht lösen. Geeignete Befestigungselemente sind aus dem Stand der Technik bekannt und werden hierin nicht näher beschrieben.

Um zu erreichen, daß das erfindungsgemäße Überwachungs-/Unterhaltungssystem bei möglichst vielen unterschiedlichen Kindersitztypen eingesetzt werden kann, ohne daß der Grundrahmen der jeweiligen Kindersitze entsprechend angepaßt werden muß, ist vorgesehen, daß das am Formkörper des Überwachungs-/Unterhaltungssystems ausgebildete zumindest eine Befestigungselement derart ausgelegt ist, vorzugsweise den Kopfbereich des Grundrahmens, d.h. den oberen Abschnitt des Grundrahmens zumindest teilweise zu umfassen. Dadurch wird eine sichere Fixierung des Überwachungs-/Unterhaltungssystems am Grundrahmen des Kindersitzes gewährleistet, und zwar nahezu unabhängig von dem Typ des Kindersitzes.

Wie bereits angedeutet, ist es bevorzugt, daß das am Formkörper ausgebildete zumindest eine Befestigungselement derart ausgelegt ist, um eine lösbare, insbesondere manuell lösbare Verbindung mit dem Grundrahmen des Kindersitzes zu bilden, so daß das Überwachungs-/Unterhaltungssystem vom Grundrahmen des Kindersitzes leicht abnehmbar ist. Dies ist insbesondere dann von Vorteil, wenn das Überwachungs-/Unterhaltungssystem nur temporär am Kindersitz befestigt werden soll. Andererseits bietet das Vorsehen einer lösbaren Verbindung zwischen dem Formkörper des Überwachungs-/Unterhaltungssystems und dem Kindersitz den Vorteil der leichten und unkomplizierten Nachrüstbarkeit eines Kindersitzes mit einem derartigen System, ohne daß hierfür spezielles Werkzeug erforderlich ist. Mögliche Realisierungen von Befestigungselementen, die eine lösbare Verbindungsfunktion aufweisen, wurden vorstehend kurz angedeutet und sind im Prinzip aus dem Stand der Technik bekannt. Insbesondere eignet sich hierbei aber eine Schnappverbindung.

Um zu erreichen, daß das erfindungsgemäße Überwachungs-/Unterhaltungssystem nicht nur für den Fall der Überwachung bzw. Unterhaltung des in dem Kindersitz sitzenden Kindes einsetzbar ist, wenn die Sitzschale des Kindersitzes entgegen der Fahrtrichtung ausgerichtet ist, ist bei einer besonders bevorzugten Weiterentwicklung des erfindungsgemäßen Systems vorgesehen, daß das am Formkörper ausgebildete zumindest eine Befestigungselement ferner derart ausgelegt ist, daß das Überwachungs-/Unterhaltungssystem auf eine Kopfstütze eines Fahrzeugsitzes aufsteckbar ist, wobei dann in dem an der Kopfstütze des Fahrzeugsitzes befestigten Zustand des Formkörpers die Vorderseite des Formkörpers und die in dem Formkörper aufgenommene zumindest eine elektronische Baugruppe zu der Sitzschale des Kindersitzes zeigen, wenn die Sitzschale des Kindersitzes in Fahrtrichtung ausgerichtet ist.

Diese bevorzugte Weiterentwicklung der erfindungsgemäßen Lösung vergrößert insbesondere den Einsatzbereich des Überwachungs-/Unterhaltungssystems in außerordentlicher Weise. Einerseits eignet sich das System zur Befestigung am Grundrahmen des Kindersitzes, so daß das in der Sitzschale sitzende Kind auch dann überwacht bzw. unterhalten werden kann, wenn die Sitzschale des Kindersitzes entgegen der Fahrtrichtung ausgerichtet ist, andererseits allerdings kann ein und dasselbe System verwendet werden, um auch das Kind dann zu überwachen bzw. zu unterhalten, wenn die Sitzschale des Kindersitzes in Fahrtrichtung ausgerichtet ist. Hierfür ist es lediglich erforderlich, den vorzugsweise am Grundrahmen des Kindersitzes lösbar befestigten Formkörper des Überwachungs-/Unterhaltungssystems von dem Grundrahmen des Kindersitzes zu lösen und auf die Kopfstütze des Fahrzeugsitzes zu stecken. Dabei wäre es denkbar, daß ein und dieselben Befestigungselemente des Formkörpers sowohl für die Fixierung am Grundrahmen des Kindersitzes als auch für die Fixierung an der Kopfstütze des Fahrzeugsitzes verwendbar sind.

Als Verbindungselement kommt hierfür insbesondere ein krampen- oder klammerartiges Verbindungsglied in Frage, welches an seinem ersten Ende mit dem Formkörper verbunden ist, und welches beispielsweise eine gebogene oder gewinkelte Formgebung aufweist, so daß sein zweites Ende mit der jeweiligen Trägerstruktur (Grundrahmen des Kindersitzes bzw. Kopfstütze des Fahrzeugsitzes) lösbar in Eingriff bringbar ist.

In einer besonders bevorzugten Realisierung des Verbindungselements, welches einerseits mit dem Grundrahmen des Kindersitzes und andererseits mit der Kopfstütze des Fahrzeugsitzes in Eingriff bringbar ist, ist vorgesehen, daß das Verbindungselement ein krampen- oder klammerartiges Verbindungsglied aufweist, welches seinerseits als elastisches Flügelteil ausgebildet ist, wobei das zweite Ende des Flügelteils derart, insbesondere hakenförmig ausgebildet ist, daß es mit der jeweiligen Trägerstruktur eine lösbare Schnappverbindung bilden kann.

Andererseits bzw. zusätzlich hierzu wäre es denkbar, daß das zumindest eine Befestigungselement derart ausgebildet ist, daß bei der Befestigung an der Kopfstütze des Fahrzeugsitzes der Formkörper in gewisser Weise die Kopfstütze umgreift, so daß der Formkörper zumindest teilweise über die Kopfstütze gestülpt werden kann. Nicht zuletzt dadurch ist der Einsatz des erfindungsgemäßen Überwachungs-/Unterhaltungssystems auch bei nahezu jeden Kopfstützentypen möglich, ohne daß ein vollständiger und zeitaufwendiger Austausch der Kopfstützen erforderlich ist. Dabei ist die erfindungsgemäße Lösung nicht auf Fahrzeugsitze beschränkt, bei denen die Kopfstütze separat von dem Sitz ausgebildet ist. Vielmehr eignet sich das erfindungsgemäße System auch für den Einsatz bei Fahrzeugsitzen, bei welchen die Kopfstütze einstückig mit dem gesamten Fahrzeugsitz ausgebildet ist.

Bei einer bevorzugten Realisierung der zuletzt genannten Ausführungsformen sind zusätzlich zu dem am Formkörper des Überwachungs-/Unterhaltungssystems ausgebildeten zumindest einen Befestigungselement weitere Befestigungsmittel vorgesehen, die insbesondere im Hinblick auf unterschiedliche Fahrzeugsitz-Kopfstütztypen und/oder Kindersitz-Grundträgertypen einstellbar sind. Als mögliche Realisierung hiervon käme ein auf einem Klettverschluß basierendes zusätzliches Befestigungsmittel in Frage. Der Klettverschluß ist ein textiles, nahezu beliebig oft zu lösendes Verschlußmittel, welches aus beispielsweise zwei Nylonstreifen besteht, wovon einer Widerhäkchen und der andere Schlaufen hat. Es ist bekannt, daß derartige Klettverschlüsse im zusammengepreßten Zustand eine sichere Befestigung zusätzlich zu der Befestigung, die von den Befestigungselementen bereitgestellt wird, gegeben ist.

Im folgenden werden bevorzugte Ausführungsformen des erfindungsgemäßen Überwachungs-/Unterhaltungssystems anhand der Zeichnungen näher erläutert.

Es zeigen:
- Fig. 1: eine perspektivische Ansicht einer ersten bevorzugten Ausführungsform des erfindungsgemäßen Überwachungs-/Unterhaltungssystems in seinem am Grundträger eines Kindersitzes befestigten Zustand;
- Fig. 2a, b: Detailansichten des in Fig. 1 gezeigten Überwachungs-/Unterhaltungs- systems am oberen Kopfbereich des Kindersitz-Grundträgers zum Erläu- tern des Aufsteckens des Überwachungs-/Unterhaltungssystems auf den Grundträger des Kindersitzes;
- Fig. 3: eine zweite bevorzugte Ausführungsform des erfindungsgemäßen Überwa- chungs-/Unterhaltungssystems zur Befestigung am Grundträger des Kin- dersitzes;
- Fig. 4: das in Fig. 3 gezeigte Überwachungs-/Unterhaltungssystem gemäß der zweiten bevorzugten Ausführungsform in seinem am Grundträger des Kin- dersitzes befestigten Zustand und in längsgeschnittener Darstellung;
- Fig. 5a - 5d: mögliche Abwandlungen des in den Fig. 3 und 4 gezeigten Überwachungs- /Unterhaltungssystems gemäß der zweiten bevorzugten Ausführungsform;
- Fig. 6: eine perspektivische Ansicht auf einen Kindersitz, bei welchem das Über- wachungs-/Unterhaltungssystem gemäß Fig. 4 am oberen Kopfbereich des Grundrahmens montiert ist; und
- Fig. 7: eine perspektivische Darstellung des in den Fig. 3 bis 6 gezeigten Überwa- chungs-/Unterhaltungssystems in seinem an der Kopfstütze des Fahrzeug- sitzes montierten Zustand.

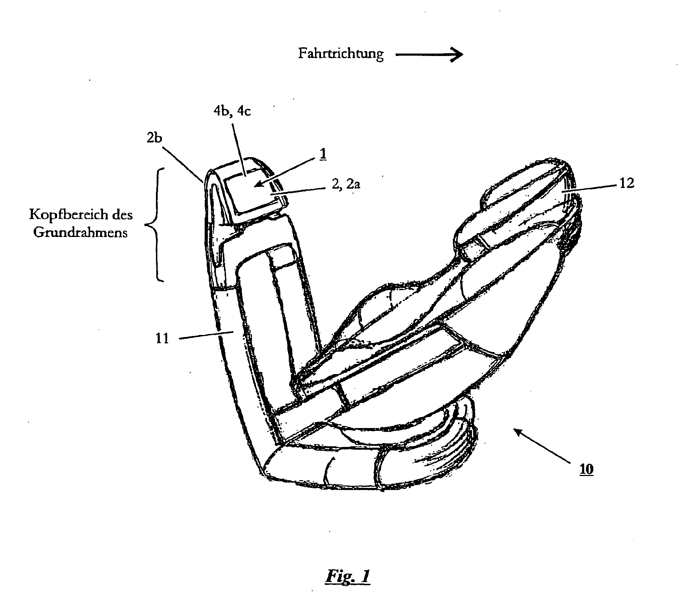

Fig. 1 zeigt eine erste bevorzugte Ausführungsform des erfindungsgemäßen Überwachungs-/Unterhaltungssystems 1 in seinem an einem Grundrahmen 11 eines Kindersitzes 10 befestigten Zustand. Das Überwachungs-/Unterhaltungssystem 1 weist als elektronische Baugruppe bei der dargestellten Ausführungsform ein DVD- bzw. Video-Abspielsystem 4b, 4c auf, von welchem insbesondere in Fig. 1 der Flachbildschirm zu erkennen ist. Dieses Medien-Abspielsystem 4b, 4c ist in einem Formkörper 2 integriert. Der Formkörper 2 selber weist in Fig. 1 nicht explizit dargestellte Befestigungselemente auf, welche ausgelegt sind, eine kraftschlüssige Verbindung zwischen dem Formkörper 2 und dem Grundrahmen 11 des Kindersitzes 10 zu bilden, um derart das Überwachungs-/Unterhaltungssystem 1 am Grundrahmen 11 des Kindersitzes 10 zu befestigen.

In Fig. 1 ist eine Situation gezeigt, in welcher die Sitzschale 12 des Kindersitzes 10 entgegen der beabsichtigten Fahrtrichtung ausgerichtet ist. Im einzelnen ist dabei vorgesehen, daß in dem am Grundrahmen 11 des Kindersitzes 10 befestigten Zustand des Formkörpers 2 die Vorderseite 2a des Formkörpers 2 und der in dem Formkörper 2 aufgenommene Flachbildschirm 4b, 4c zu der Sitzschale 12 des Kindersitzes 10 zeigt.

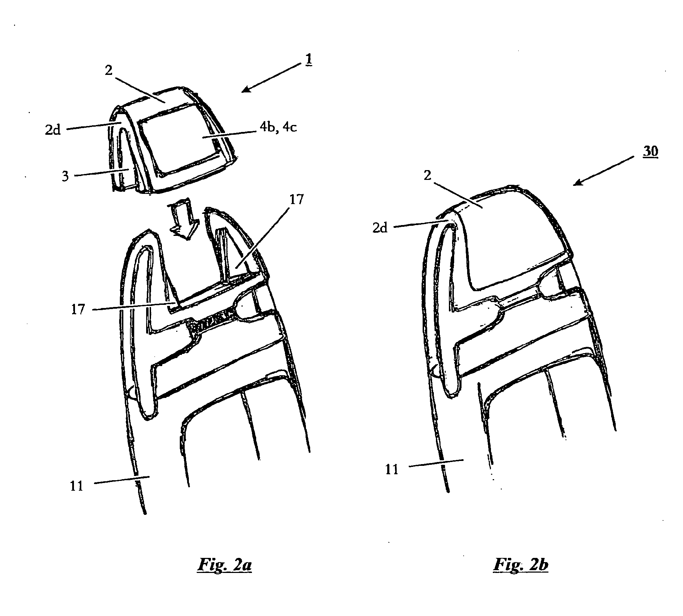

In Fig. 2a und 2b sind Detailansichten des Kopfbereiches des in Fig. 1 gezeigten Grundrahmens 11 dargestellt. Im einzelnen wird hier verdeutlicht, wie das Überwachungs-/Unterhaltungssystem 1 gemäß der ersten bevorzugten Ausführungsform der vorliegenden Erfindung an dem Grundrahmen 11 des Kindersitzes 10 befestigt werden kann.

Wie dargestellt, weist der Formkörper ein integral mit dem Formkörper 2 ausgebildetes Befestigungselement 3 auf, welches mit einem am Grundrahmen 11 des Kindersitzes 10 komplementär hierzu ausgebildeten Verankerungselement 17 in Eingriff bringbar ist, um eine form- und kraftschlüssige Verbindung des Formkörpers 2 mit dem Grundrahmen 11 des Kindersitzes 10 zu bilden. Dabei ist das Befestigungselement 3 und das Verankerungselement 17 so ausgebildet, daß sie ineinandergreifbar sind, um das Überwachungs-/Unterhaltungssystem 1 am Kopfbereich des Kindersitz-Grundrahmens 11 zu befestigen. Der Fig. 2a ist zu entnehmen, daß hierzu beispielsweise eine entsprechend ausgelegte Feder-Nut-Anordnung bzw. Schwalbenschwanz-Anordnung möglich ist.

In Fig. 2b ist ein Zustand gezeigt, in welchem das Überwachungs-/Unterhaltungssystem 1 von dem Kopfbereich des Grundrahmens 11 des Kindersitzes entfernt wurde, und wobei anstelle des Überwachungs-/Unterhaltungssystems 1 eine Blende 30 eingesetzt ist. Diese Blende 30 entspricht, mit Ausnahme der elektronischen Baugruppe 4b, 4c, die bei der Blende 30 nicht vorgesehen ist, dem in Fig. 1 bzw. Fig. 2a gezeigten System. Dies gilt insbesondere im Hinblick auf die Ausbildung eines Formkörpers sowie im Hinblick auf die Ausbildung von entsprechenden Befestigungselementen.

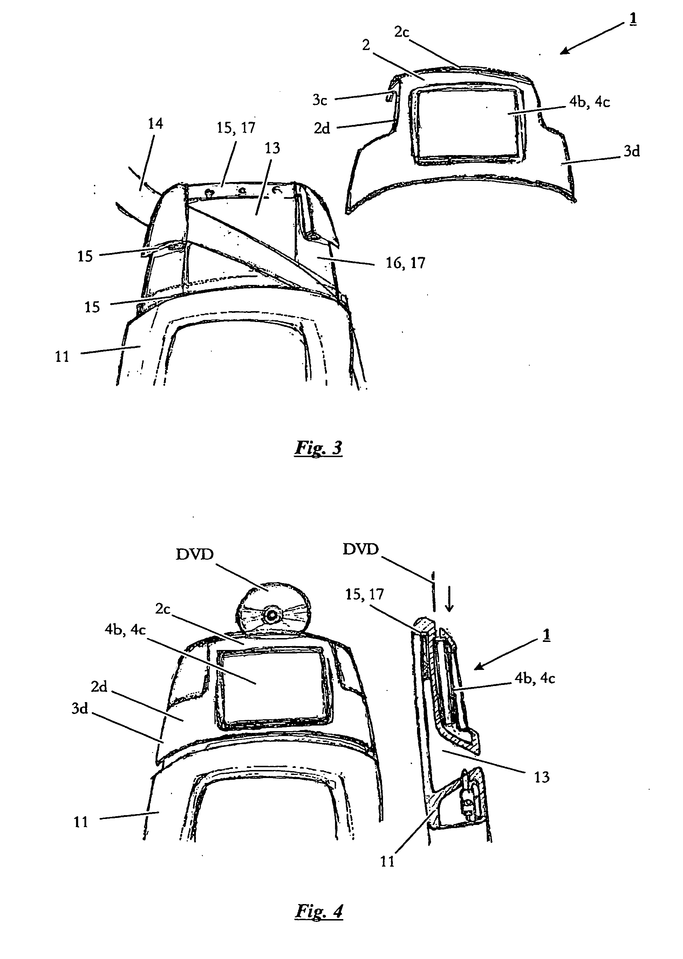

Fig. 3 zeigt eine zweite bevorzugte Ausführungsform des erfindungsgemäßen Überwachungs-/Unterhaltungssystems 1 in einem Zustand unmittelbar bevor das System 1 am Grundrahmen 11 des in Fig. 3 nicht explizit dargestellten Kindersitzes 10 aufgesteckt ist. Das Überwachungs-/Unterhaltungssystem 1 gemäß der zweiten bevorzugten Ausführungsform weist wiederum einen Formkörper 2 sowie eine elektronische Baugruppe 4 zum Darstellen und/oder Aufnehmen von Bildern, Filmen oder Filmsequenzen auf. Wie auch bei der ersten bevorzugten Ausführungsform gemäß den Fig. 1 und 2 ist diese elektronische Baugruppe 4 in dem Formkörper 2 aufgenommen und gehalten. Des weiteren sind am Formkörper 2 vorzugsweise integral mit dem Formkörper 2 ausgebildete Befestigungselemente 3 vorgesehen, welche ausgelegt sind, eine kraft- und formschlüssige Verbindung zwischen dem Formkörper 2 und dem Grundrahmen 11 des Kindersitzes zu bilden. Im einzelnen sind hierzu an der Oberseite 2c des Formkörpers 2 ein Befestigungselement 3c für einen Eingriff mit einer sich im wesentlichen horizontal erstreckenden Kante 15 des Grundrahmens 11 des Kindersitzes 10 und jeweils ein an einer der Seiten 2d des Formkörpers 2 ausgebildetes Befestigungselement 3d für einen Eingriff mit einer sich im wesentlichen vertikal erstreckenden Kante 16 des Grundrahmens 11 des Kindersitzes 10 ausgebildet. Die jeweiligen Befestigungselemente 3c, 3d weisen eine entsprechende Profilierung zum Eingriff in die jeweiligen Kanten 15, 16 des Grundrahmens 11 des Kindersitzes 10 auf. Denkbar hierbei wäre es, daß der Grundrahmen 11 entsprechende Wulstvorsprünge 17 aufweist, in die die jeweiligen Befestigungselemente 3c, 3d im montierten Zustand eingreifen.

Insbesondere ist der Fig. 3 zu entnehmen, daß das Formteil 2 mit seinen integral ausgebildeten Befestigungselementen eine leicht gekrümmte Außenoberfläche aufweist. Dadurch wird insbesondere der Aufprallsicherheit Sorge getragen. Andererseits dient die leichte Krümmung dazu, daß die jeweiligen am peripheren Bereich 2c, 2d des Formkörpers 2 ausgebildeten Befestigungselemente 3c, 3d derart ausbildbar sind, um den Kopfbereich des Grundrahmens 11 zumindest teilweise zu umfassen, was insbesondere auch die sichere Fixierung des Überwachungs-/Unterhaltungssystems 1 am Grundrahmen 11 des Kindersitzes 10 gewährleistet.

Der Fig. 3 ist des weiteren zu entnehmen, daß der Formkörper 2 derart ausgebildet ist, daß in seinem am Grundrahmen 11 des Kindersitzes 10 befestigten Zustand zwischen der Rückseite 2d des Formkörpers 2 und dem Grundrahmen 11 des Kindersitzes 10 ein Gurtführungsbereich 13 gebildet wird, in welchem ein Befestigungsgurt 14 des Kindersitzes 10 geführt wird. Das Vorsehen eines derartigen Gurtführungsbereiches 13 ermöglicht es, daß die Sicherheit und Funktionsweise des Kindersitzes 10 durch den Einbau des Überwachungs-/Unterhaltungssystems 1 nicht beeinflußt werden.

Fig. 4 zeigt eine mögliche Alternative der zweiten bevorzugten Ausführungsform gemäß Fig. 3, bei welcher als elektronische Baugruppe ein DVD-Abspielgerät zum Einsatz kommt. Wie dargestellt, ist die DVD von der Oberseite 2c des Formkörpers 2 in die elektronische Baugruppe einführbar. Des weiteren ist ein Flachbildschirm dargestellt, um Bilder, Filme oder Filmsequenzen anzuzeigen.

In Fig. 4 ist des weiteren eine Längsschnittdarstellung des Kopfbereiches des Grundrahmens 11 dargestellt, und zwar in einem Zustand, wenn das Überwachungs-/Unterhaltungssystem 1 gemäß der zweiten bevorzugten Ausführungsform der vorliegenden Erfindung an dem Grundrahmen 11 befestigt ist. Insbesondere kann in dieser Längsschnittdarstellung der zwischen der Rückseite 2b des Formkörpers 2 und dem Grundrahmen 11 des Kindersitzes 10 ausgebildete Gurtführungsbereich 13 erkannt werden. Des weiteren zeigt die Längsschnittdarstellung, wie das Befestigungselement 3c, welches an der Oberseite 2c des Formkörpers 2 ausgebildet ist, mit der sich im wesentlichen horizontal erstreckenden Kante 15 des Grundrahmens 11 des Kindersitzes 10 im montierten Zustand in Eingriff steht.

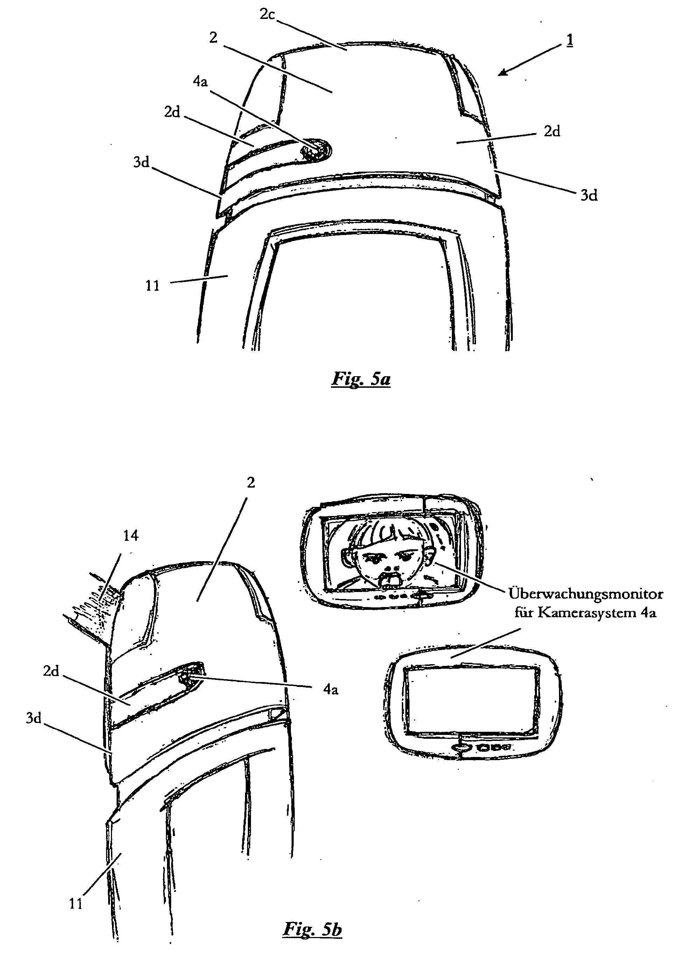

In den Fig. 5a bis 5d sind weitere Alternativen der zweiten bevorzugten Ausführungsform des erfindungsgemäßen Überwachungs-/Unterhaltungssystems 1 gemäß den Fig. 3 und 4 dargestellt, die nachfolgend kurz beschrieben werden sollen.

In Fig. 5a eine Ausführungsform gezeigt, bei welcher als elektronische Baugruppe einzig und allein ein Kamerasystem 4a zum Einsatz kommt. Dieses Kamerasystem 4a dient insbesondere zum Überwachen eines in dem (nicht dargestellten) Kindersitz sitzenden Kindes. In vorteilhafter Weise sind innerhalb des Formkörpers (nicht dargestellte) elektronische Komponenten vorgesehen, um die mit dem Kamerasystem 4a aufgezeichneten Bilder bzw. Filmsequenzen drahtgebunden oder kabellos an einen Überwachungsmonitor (ebenfalls nicht dargestellt) zu übertragen, mit deren Hilfe die beispielsweise auf einem Vordersitz des Fahrzeuges sitzenden Insassen das in dem Kindersitz sitzende Kind beobachten können.

In Fig. 5b ist die in Fig. 5a gezeigte Ausführungsform in einer perspektivischen Seitenansicht dargestellt, in welcher als elektronische Baugruppe ein Kamerasystem 4a zum Einsatz kommt, wobei zusätzlich die Überwachungsmonitore 4e gezeigt sind, auf welchen die mit dem Kamerasystem 4a aufgezeichneten Bilder oder Filmsequenzen angezeigt werden. Die Datenübertragung zwischen dem Kamerasystem 4a und den Überwachungsmonitoren 4e kann drahtgebunden oder aber auch kabellos sein. Derartige Übertragungsverfahren sind als solche aus dem Stand der Technik bekannt und es wird auf diese hierin nicht näher eingegangen.

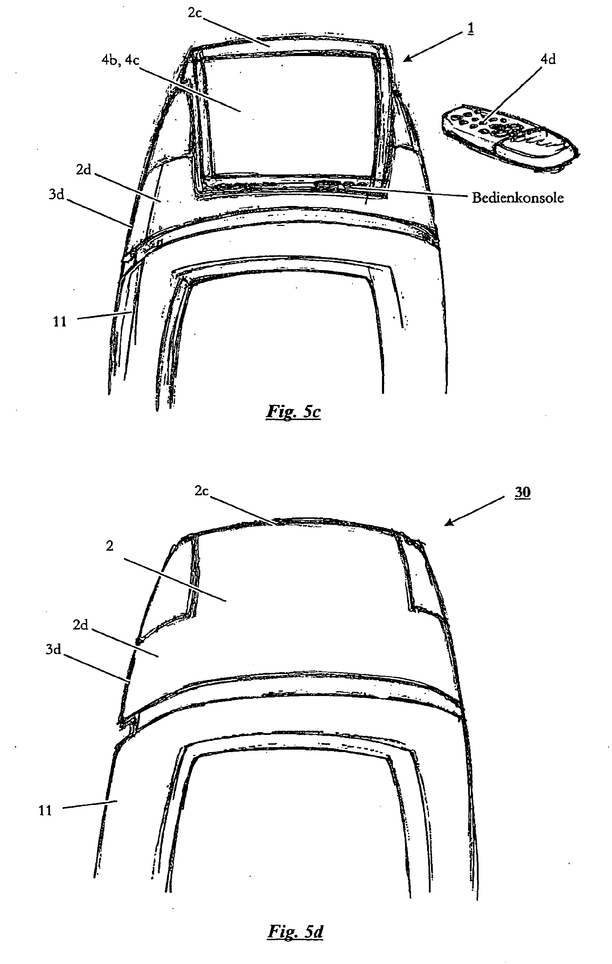

In Fig. 5c ist eine Ausführungsform gezeigt, bei welcher als elektronische Baugruppe ein Medien-Abspielgerät 4b, 4c eingesetzt wird, welches mit Hilfe einer Fernbedienung 4d ansteuerbar ist. Denkbar wäre dabei, daß das Medien-Abspielgerät 4b, 4c beispielsweise ein kombiniertes Fernseh- und DVD-Abspielsystem ist. Die in Fig. 5b gezeigte Ausführungsform hat den Vorteil, daß mit Hilfe der Fernbedienung 4d das angezeigte Programm ausgewählt werden kann.

In Fig. 5d ist ein Zustand gezeigt, in welchem das Überwachungs-/Unterhaltungssystem 1 von dem Kopfbereich des Grundrahmens 11 des Kindersitzes entfernt wurde, und wobei anstelle des Überwachungs-/Unterhaltungssystems 1 eine Blende 30 eingesetzt ist. Diese Blende 30 entspricht, mit Ausnahme der elektronischen Baugruppe 4a, 4b, 4c, die bei der Blende 30 nicht vorgesehen ist, dem in Fig. 5a bzw. in den Fig. 3 und 4 gezeigten System. Dies gilt insbesondere im Hinblick auf die Ausbildung eines Formkörpers sowie im Hinblick auf die Ausbildung von entsprechenden Befestigungselementen.

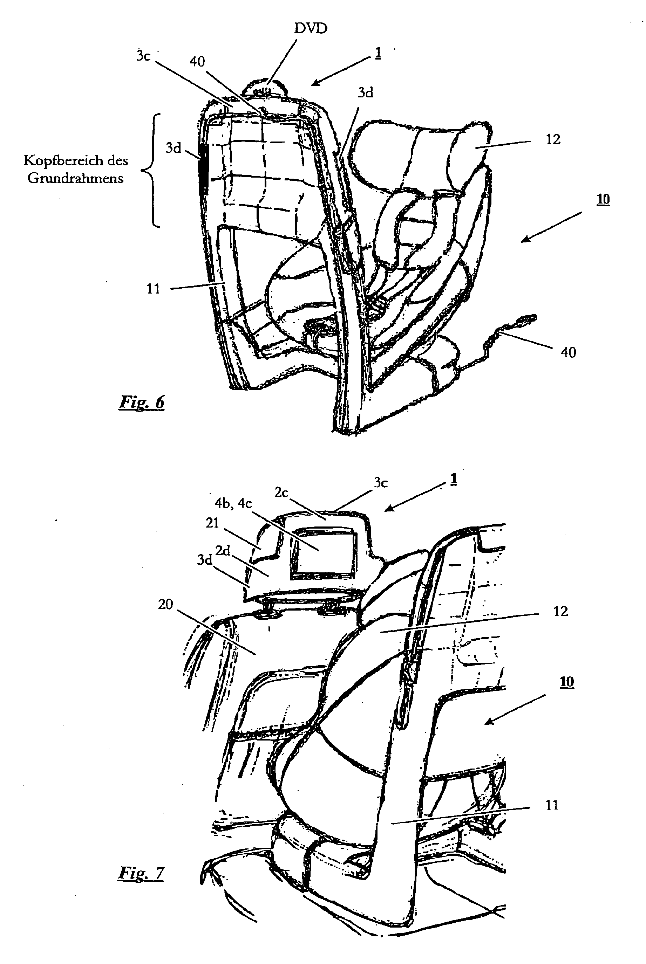

Fig. 6 zeigt eine perspektivische Ansicht eines Kindersitzes, bei welchem das zuvor unter Bezugnahme auf die Fig. 3 bis 5 beschriebene Überwachungs-/Unterhaltungssystem 1 gemäß der zweiten bevorzugten Ausführungsform zum Einsatz kommt. In Fig. 6 ist insbesondere zu erkennen, daß die am Formkörper 2 des Überwachungs-/Unterhaltungssystems 1 ausgebildeten Befestigungselemente 3 den Kopfbereich des Grundrahmens 11 des Kindersitzes 10 teilweise umfassen.

Sämtliche vorstehend beschriebenen bevorzugten Ausführungsformen und Alternativen des erfindungsgemäßen Überwachungs- und/oder Unterhaltungssystems 1 sind derart ausgebildet, daß die Befestigungselemente 3 mit dem Grundrahmen 11 des Kindersitzes 10 eine insbesondere manuell lösbare Verbindung bilden, so daß das Überwachungs-/Unterhaltungssystem 1 vom Grundrahmen 11 des Kindersitzes 10 ohne spezielles Werkzeug leicht abnehmbar ist.

In Fig. 7 ist ein Zustand gezeigt, bei welchem das vorstehend unter Bezugnahme auf die Fig. 3 bis 6 beschriebene Überwachungs-/Unterhaltungssystem 1 gemäß der zweiten bevorzugten Ausführungsform von dem Grundrahmen 11 des Kindersitzes 10 entfernt wurde und auf eine Kopfstütze 21 eines Fahrzeugsitzes 20 aufgesteckt ist. Dabei ist vorgesehen, daß in dem an der Kopfstütze 21 des Fahrzeugsitzes 20 befestigten Zustand des Formkörpers 2 die Vorderseite 2a des Formkörpers 2 und die in dem Formkörper 2 aufgenommene zumindest eine elektronische Baugruppe (hier ein Medien-Abspielsystem 4b, 4c) zu der Sitzschale 12 des Kindersitzes 10 zeigt, wobei die Sitzschale 12 des Kindersitzes 10 in Fahrtrichtung ausgerichtet ist. Insbesondere sind die am Formkörper 2 vorgesehenen Befestigungselemente 3 derart ausgebildet, daß ein Aufstecken des Überwachungs-/Unterhaltungssystems 1 auf die Kopfstütze 21 des Fahrzeugsitzes 20 ermöglicht wird, wobei eine kraftschlüssige Verbindung zwischen dem Überwachungs-/Unterhaltungssystem 1 und der Kopfstütze 21 bzw. dem Fahrzeugsitz 20 gewährleistet ist.

Zusätzlich zu den Befestigungselementen 3 können weitere Befestigungsmittel 5 vorgesehen sein, die in Fig. 7 nur angedeutet sind. Diese zusätzlichen Befestigungsmittel 5 sind insbesondere im Hinblick auf verschiedene Fahrzeug-Kopfstütztypen einstellbar; denkbar hierbei wäre es, ein Klettverschlußsystem zu verwenden, um somit die Fixierung des Überwachungs-/Unterhaltungssystems an der Kopfstütze 21 des Fahrzeugsitzes 20 noch weiter zu verstärken. Selbstverständlich ist aber auch denkbar, daß diese zusätzlichen Befestigungsmittel 5 auch zur zusätzlichen Befestigung des Formkörpers 2 an dem Grundrahmen 11 des Kindersitzes 10 einsetzbar sind.

Es sei darauf hingewiesen, daß die Ausführung der Erfindung nicht auf die in den Fig. 1 bis 7 beschriebenen Ausführungsbeispiele beschränkt ist, sondern auch in einer Vielzahl von Varianten möglich ist. Insbesondere können die Art und Anordnung der Befestigungselemente 3 am Formkörper 2 verschieden von den dargestellten Anordnungen sein.

### Bezugszeichenliste

- 1: Überwachungs-/Unterhaltungssystem
- 2: Formkörper
- 2a: Vorderseite des Formkörpers
- 2b: Rückseite des Formkörpers
- 2c: Oberseite des Formkörpers
- 2d: Seite des Formkörpers
- 3: Befestigungselement
- 3c: Befestigungselement an Oberseite des Formkörpers
- 3d: Befestigungselement an Seite des Formkörpers
- 4: elektronische Baugruppe
- 4a: Kamerasystem (elektronische Baugruppe)
- 4b, c: Medien-Abspielgerät (elektronische Baugruppe)
- 4d: Fernbedienung
- 5: Befestigungsmittel
- 10: Kindersitz
- 11: Grundrahmen
- 12: Sitzschale
- 13: Gurführungsbereich
- 14: Befestigungsgurt
- 15: horizontale Kante des Grundrahmens
- 16: vertikale Kante des Grundrahmens
- 17: Wulstvorsprung, Verankerungsnut
- 20: Fahrzeugsitz
- 21: Kopfstütze
- 30: Blende

## Patentansprüche

1. Überwachungs- und/oder Unterhaltungssystem (1), insbesondere für einen Kindersitz, zum Überwachen und/oder Unterhalten eines in einem Kindersitz (10) sitzenden Kindes, mit:
- zumindest einer elektronischen Baugruppe (4a, 4b, 4c, 4d) zum Darstellen und/oder Aufnehmen von Bildern, Filmen oder Filmsequenzen; und
- einem Formkörper (2), in welchem die zumindest eine elektronische Baugruppe (4a, 4b, 4c, 4d) aufgenommen und gehalten ist,
wobei der Formkörper (2) zumindest ein, vorzugsweise integral mit dem Formkörper (2) ausgebildetes Befestigungselement (3) aufweist, welches ausgelegt ist, eine kraftschlüssige Verbindung mit einem Grundrahmen (11) des Kindersitzes (10) zu bilden, um derart das Überwachungs-/Unterhaltungssystem (1) am Grundrahmen (11) des Kindersitzes (1) zu befestigen, **dadurch gekennzeichnet, dass** die Vorderseite (2a) des Formkörpers (2) und die in dem Formkörper (2) aufgenommene zumindest eine elektronische Baugruppe (4a, 4b, 4c, 4d) in dem am Grundrahmen (11) des Kindersitzes (10) befestigten Zustand des Formkörpers (2) zu einer Sitzschale (12) des Kindersitzes (10) zeigt, wenn die Sitzschale (12) des Kindersitzes (10) entgegen der Fahrtrichtung ausgerichtet ist.

2. System nach Anspruch 1,
wobei die elektronische Baugruppe (4a, 4b, 4c, 4d) ein Kamerasystem (4a), ein DVD-Abspielsystem (4b), ein Videosystem (4c), einen MP4-Player, einen direkten Internetzugang oder ein derartiges Medien-Abspiel- bzw. Aufzeichnungssystem aufweist.

3. System nach Anspruch 1 oder 2,
wobei der Formkörper (2) derart ausgebildet ist, daß dieser formschlüssig in bzw. an dem Grundrahmen (11) des Kindersitzes (10) aufnehmbar ist.

4. System nach einem der vorhergehenden Ansprüche,
wobei der Formkörper (2) derart ausgebildet ist, daß in seinem am Grundrahmen (11) des Kindersitzes (10) befestigten Zustand zwischen der Rückseite (2b) des Formkörpers (2) und dem Grundrahmen (11) des Kindersitzes (10) ein Gurtführungsbereich (13) gebildet wird, in welchem ein Befestigungsgurt (14) des Kindersitzes (10) geführt wird.

5. System nach einem der vorhergehenden Ansprüche,
wobei das zumindest eine Befestigungselement (3) des Formkörpers (2) zumindest ein an der Oberseite (2c) des Formkörpers (2) ausgebildetes Befestigungselement (3c) für einen Eingriff mit einer sich im wesentlichen horizontal erstreckenden Kante (15) des Grundrahmens (11) des Kindersitzes (10) und/oder zumindest an einer der Seiten (2d) des Formkörpers (2) ausgebildetes Befestigungselement (3d) für einen Eingriff mit einer sich im wesentlichen vertikal erstreckenden Kante (16) des Grundrahmens (11) des Kindersitzes (10) aufweist.

6. System nach einem der vorhergehenden Ansprüche,
wobei das zumindest eine Befestigungselement (3) eine Profilierung zum Eingriff in einer am Grundrahmen (11) des Kindersitzes (10) ausgebildeten Verankerungsnut (17) aufweist.

7. System nach Anspruch 6,
wobei das zumindest eine Befestigungselement (3) ausgelegt ist, in einen am Grundrahmen (11) des Kindersitzes (10) ausgebildeten Wulstvorsprung (17) einzugreifen.

8. System nach einem der vorhergehenden Ansprüche,
wobei das zumindest eine Befestigungselement (3) ausgebildet ist, den Kopfbereich des Grundrahmens (11) zumindest teilweise zu umfassen.

9. System nach einem der vorhergehenden Ansprüche,
wobei das am Formkörper (2) ausgebildete zumindest eine Befestigungselement (3) ausgelegt ist, eine lösbare Verbindung mit dem Grundrahmen (11) des Kindersitzes (10) zu bilden, so daß das Überwachungs-/Unterhaltungssystem (1) vom Grundrahmen (11) des Kindersitzes (10) abnehmbar ist.

10. System nach Anspruch 9,
wobei das am Formkörper (2) ausgebildete zumindest eine Befestigungselement (3) ferner derart ausgelegt ist, daß das Überwachungs-/Unterhaltungssystem (1) auf eine Kopfstütze (21) eines Fahrzeugsitzes (20) aufsteckbar ist, wobei die Vorderseite (2a) des Formkörpers (2) und die in dem Formkörper (2) aufgenommene zumindest eine elektronische Baugruppe (4a, 4b, 4c) in dem an der Kopfstütze (21) des Fahrzeugsitzes (20) befestigten Zustand des Formkörpers (2) zu der Sitzschale (12) des Kindersitzes (10) zeigt, wenn die Sitzschale (12) des Kindersitzes (10) in Fahrtrichtung ausgerichtet ist.

11. System nach Anspruch 10,
wobei am Formkörper (2) zusätzliche, insbesondere im Hinblick auf verschiedene Fahrzeugsitz-Kopfstütztypen und/oder Kindersitz-Grundträgertypen einstellbare Befestigungsmittel (5) vorgesehen sind.

## Claims

1. Monitoring and/or entertainment system (1), especially for a child seat, for monitoring and/or entertaining a child sitting in a child seat (10), having:
- at least one electronic assembly (4a, 4b, 4c, 4d) for displaying and/or recording images, films or film sequences; and
- a moulded body (2) in which the at least one electronic assembly (4a,
4b, 4c, 4d) is mounted and held,
the moulded body (2) having at least one fixing element (3), preferably formed integrally with the moulded body (2), which fixing element is arranged to form a force-based connection to a base frame (11) of the child seat (10) in order thus to fix the monitoring/entertainment system (1) to the base frame (11) of the child seat (1), **characterized in that** when the moulded body (2) is in the state in which it is fixed to the base frame (11) of the child seat (10) the front side (2a) of the moulded body (2) and the at least one electronic assembly (4a, 4b, 4c, 4d) mounted in the moulded body (2) face towards a seat shell (12) of the child seat (10) when the seat shell (12) of the child seat (10) is aligned in the direction opposite to the direction of travel.

2. System according to claim 1,
wherein the electronic assembly (4a, 4b, 4c, 4d) has a camera system (4a), a DVD-playing system (4b), a video system (4c), an MP4 player, direct internet access or a media-playing or recording system of that kind.

3. System according to claim 1 or 2,
wherein the moulded body (2) is constructed in such a way that it can be mounted interlockingly in or on the base frame (11) of the child seat (10).

4. System according to any one of the preceding claims,
wherein the moulded body (2) is constructed in such a way that when it is in the state in which it is fixed to the base frame (11) of the child seat (10) there is formed between the rear side (2b) of the moulded body (2) and the base frame (11) of the child seat (10) a belt-guiding region (13) in which a fastening belt (14) of the child seat (10) is guided.

5. System according to any one of the preceding claims,
wherein the at least one fixing element (3) of the moulded body (2) has at least one fixing element (3c) provided on the upper side (2c) of the moulded body (2) for engagement with a substantially horizontally extending edge (15) of the base frame (11) of the child seat (10) and/or at least one fixing element (3d) provided on one of the sides (2d) of the moulded body (2) for engagement with a substantially vertically extending edge (16) of the base frame (11) of the child seat (10).

6. System according to any one of the preceding claims,
wherein the at least one fixing element (3) has profiling for engagement in an anchoring groove (17) provided on the base frame (11) of the child seat (10).

7. System according to claim 6,
wherein the at least one fixing element (3) is arranged to engage in a bulbous projection (17) provided on the base frame (11) of the child seat (10).

8. System according to any one of the preceding claims,
wherein the at least one fixing element (3) is constructed so as to at least partially surround the head region of the base frame (11).

9. System according to any one of the preceding claims,
wherein the at least one fixing element (3) provided on the moulded body (2) is arranged to form a releasable connection to the base frame (11) of the child seat (10) so that the monitoring/entertainment system (1) is removable from the base frame (11) of the child seat (10).

10. System according to claim 9,
wherein the at least one fixing element (3) provided on the moulded body (2) is also arranged in such a way that the monitoring/entertainment system (1) can be fitted to a headrest (21) of a vehicle seat (20), wherein when the moulded body (2) is in the state in which it is fixed to the headrest (21) of the vehicle seat (20) the front side (2a) of the moulded body (2) and the at least one electronic assembly (4a, 4b, 4c) mounted in the moulded body (2) face towards the seat shell (12) of the child seat (10) when the seat shell (12) of the child seat (10) is aligned in the direction of travel.

11. System according to claim 10,
wherein on the moulded body (2) there are provided additional fixing means (5) which are adjustable especially in respect of different types of vehicle seat headrest and/or types of child seat base support.

## Revendications

1. Système de surveillance et/ou de divertissement (1), en particulier pour un siège d'enfant, pour la surveillance et/ou le divertissement d'un enfant assis dans un siège d'enfant (10), comprenant :
- au moins un ensemble électronique (4a, 4b, 4c, 4d) pour la représentation et/ou la prise de vue d'images, de films ou de séquences de films ; et
- un corps moulé (2), dans lequel le au moins un ensemble électronique (4a, 4b, 4c, 4d) est réceptionné et maintenu,
le corps moulé (2) présentant au moins un élément de fixation (3) conçu de préférence de façon intégrée avec le corps moulé (2), lequel élément est conçu pour former une liaison de force avec un cadre de base (11) du siège enfant (10), afin de fixer ainsi le système de surveillance/divertissement (1) sur le cadre de base (11) du siège enfant (1), **caractérisé en ce que** le côté avant (2a) du corps moulé (2) et le au moins un ensemble électronique (4a, 4b, 4c, 4d) logé dans le corps moulé (2) et fixés sur le cadre de base (11) du siège enfant (10) sont dirigés vers une coque d'assise (12) du siège enfant (10), lorsque la coque d'assise (12) du siège enfant (10) est orientée dans le sens contraire au sens de la marche.

2. Système selon la revendication 1,
l'ensemble électronique (4a, 4b, 4c, 4d) comportant un système de caméra (4a), un système de lecture de DVD (4b), un système vidéo (4c), un lecteur MP4, un accès direct à internet ou un tel système de lecture de médias ou d'enregistrement.

3. Système selon la revendication 1 ou 2,
le corps moulé (2) étant conçu de telle sorte que celui-ci peut être réceptionné par complémentarité de forme dans ou sur le cadre de base (11) du siège enfant (10).

4. Système selon l'une quelconque des revendications précédentes,
le corps moulé (2) étant conçu de telle sorte que, dans son état fixé sur le cadre de base (11) du siège enfant (10), une zone de guidage de sangle (13) est formée entre le côté arrière (2b) du corps moulé (2) et le cadre de base (11) du siège enfant (10), zone dans laquelle une sangle de fixation (14) du siège enfant (10) est guidée.

5. Système selon l'une quelconque des revendications précédentes,
le au moins un élément de fixation (3) du corps moulé (2) présentant au moins un élément de fixation (3c) réalisé sur le côté supérieur (2c) du corps moulé (2) pour un engagement avec une arête (15), s'étendant sensiblement horizontalement, du cadre de base (11) du siège enfant (10) et/ou le au moins un élément de fixation (3d) conçu sur l'un des côtés (2d) du corps moulé (2) pour un engagement avec une arête (16), s'étendant sensiblement verticalement, du cadre de base (11) du siège enfant (10).

6. Système selon l'une quelconque des revendications précédentes,
le au moins un élément de fixation (3) présentant un profilage pour l'engagement dans une rainure d'ancrage (17) réalisée sur le cadre de base (11) du siège enfant (10).

7. Système selon la revendication 6,
le au moins un élément de fixation (3) étant conçu pour s'engager dans une saillie de renflement (17) réalisée sur le cadre de base (11) du siège enfant (10).

8. Système selon l'une quelconque des revendications précédentes,
le au moins un élément de fixation (3) étant conçu pour comprendre au moins partiellement la zone supérieure du cadre de base (11).

9. Système selon l'une quelconque des revendications précédentes,
le au moins un élément de fixation (3) réalisé sur le corps moulé (2) étant conçu pour former une liaison amovible avec le cadre de base (11) du siège enfant (10), de sorte que le système de surveillance/divertissement (1) peut être enlevé du cadre de base (11) du siège enfant (10).

10. Système selon la revendication 9,
le au moins un élément de fixation (3) réalisé sur le corps moulé (2) étant conçu également de telle sorte que le système de surveillance/divertissement (1) peut être emboîté sur un appui-tête (21) d'un siège de véhicule (20), le côté avant (2a) du corps moulé (2) et le au moins un ensemble électronique (4a, 4b, 4c) réceptionné dans le corps moulé (2) et fixés sur l'appui-tête (21) du siège de véhicule (20) sont dirigés vers la coque d'assise (12) du siège enfant (10), lorsque la coque d'assise (12) du siège enfant (10) est orientée dans le sens de la marche.

11. Système selon la revendication 10,
des moyens de fixation (5) supplémentaires, pouvant être réglés en particulier par rapport à différents types d'appui-tête de siège de véhicule et/ou types de support de base de siège enfant, sont prévus sur le corps moulé (2).
